# FASCICULE DE BREVET EUROPEEN

(11) **EP 0 807 844 B1**
(45) Date de publication et mention de la délivrance du brevet: **19.03.2003**
(21) Numéro de dépôt: 97420064.4
(22) Date de dépôt: 18.04.1997
(51) Int. Cl.: G02C 5/22

(54) **Charnière élastique de lunettes démontable**
Abnehmbares Federscharnier für Brille
Removable resilient hinge for spectacles

(30) Priorité: 14.05.1996 FR 9606246
(43) Date de publication de la demande: 19.11.1997
(73) Titulaire: CHEVASSUS S.A., F-39400 Morez (FR)
(72) Inventeur: de Rossi, Valentino, 39400 Morbier (FR)
(74) Mandataire: Moinas, Michel

(56) Documents cités:
- WO-A-90/01718
- DE-A- 3 404 511
- DE-C- 4 421 309
- FR-A- 2 626 682
- FR-A- 2 690 760
- US-A- 1 504 212

## Description

La présente invention est relative à une charnière élastique de lunettes reliant une branche à une façade de monture de verres. De telles charnières élastiques donnent un effet de claquement lors du passage des branches de leur position dite "ouverte" de port de lunettes à leur position dite "fermée" de rangement, et permettent d'écarter les branches élastiquement vers l'extérieur au-delà de leur position "ouverte". Ces charnières sont très appréciées du public, notamment du fait qu'elles permettent de maintenir une bonne géométrie de la monture même si celle-ci est fréquemment utilisée, et du fait que les branches se plaquent contre les tempes avec une pression raisonnable.

De manière générale, une charnière élastique est composée d'une part d'un charnon de face fixé solidement dans le tenon latéral de la façade, et d'autre part d'un charnon de branche relié par ou avec un mécanisme de rappel élastique à l'extrémité de la branche, un axe assurant la liaison entre les charnons.

Un premier type de mécanisme de rappel connu, dit "à coulisse" comprend une coulisse mobile en translation à l'intérieur d'un logement ménagé (ou rapporté) à l'extrémité de la branche, l'extrémité émergente de la coulisse portant un charnon mâle ou femelle. L'autre chamon de façade en forme de came est en appui contre l'embouchure du logement. Dans la coulisse est réalisé un espace longitudinal de manière à y loger un ressort dont l'extrémité arrière prend appui contre la paroi arrière de la coulisse, et dont l'extrémité avant vient s'appuyer contre une butée rendue solidaire du logement, tel qu'un axe, une goupille ou une vis traversant. Lors d'une rotation de la branche, le chamon de façade repousse le logement, ce qui provoque une sortie élastique de la coulisse. Ce type de charnière élastique est, par exemple, décrit dans les documents EP 0 091 573, FR 2 258 642, FR 1 511 263, EP 0 426 947 et FR 2 702 573.

Selon un second type de mécanisme de rappel connu dit "à tige", le charnon de branche, usuellement mâle, est ménagé à l'extrémité émergente d'une tige centrale mobile en translation à l'intérieur d'un logement ménagé ou rapporté à l'extrémité de la branche. Le chamon femelle de façade en forme de came est en appui contre l'embouchure du logement. Un ressort enfilé autour de cette tige centrale prend appui d'un côté contre une surépaisseur réalisée en bout de tige, et de l'autre côté contre une goupille traversant le logement ou contre une butée s'enclenchant dans la face interne du logement pour faire office de restriction. Lors d'une rotation de la branche, le chamon de façade repousse le logement, ce qui provoque une sortie élastique de la tige. Ce type de charnière élastique est, par exemple, décrit dans les documents EP 0 340 161, FR 2 609 816 ou FR 2 664 990.

Un troisième type de charnière élastique dit "à fourreau", décrit dans le document FR 2 517 080, comprend un chamon mâle ménagé directement à l'extrémité de la branche, et relié par une vis à un chamon femelle solidaire de la façade. Un fourreau est monté coulissant sur la branche à proximité du charnon mâle. La face frontale de ce fourreau est poussée contre le chamon femelle en forme de came par un ressort également concentrique à la branche et prenant appui à l'arrière contre une butée solidaire de cette branche, telle qu'une bague sertie ou une enveloppe de branche collée. Lors d'une rotation de la branche, le charnon de façade repousse le fourreau en comprimant le ressort.

Un point faible de ces charnières réside dans leur axe de liaison : usuellement une vis dont le filetage vient s'engager dans le taraudage de l'un des deux oeilletons composant la charnière femelle. En effet, si la vis est trop serrée, la branche est difficile à ouvrir ; si elle est lâche, elle peut se dévisser et partir.

A ce titre, on connaît, par exemple des documents US 1 504 212, FR 1 126 049, DE 34 04 511 et DE 44 21 309, des charnières dont l'axe de liaison fait partie intégrante du charnon mâle en protubérant perpendiculairement de chaque côté.

Le chamon femelle du premier document consiste en un cylindre avec une fente en T ou en L inversé débouchant dans le bord supérieur. Lors de l'assemblage, on introduit l'axe dans le cylindre et on passe la branche dans la partie verticale de la fente pour ensuite la faire tourner dans la partie horizontale. Pour empêcher la charnière de se démonter, il est prévu d'enfiler un écrou dans un filetage à l'extrémité inférieure de l'axe émergeant sous le cylindre. Malheureusement, cet écrou est aussi peu fiable que les vis traditionnelles.

L'axe du charnon mâle du second document présente deux méplats, et les deux oeilletons du chamon femelle présentent chacun une fente alignée entre elles d'écartement correspondant à l'épaisseur entre les deux méplats. Ces méplats sont angulairement positionnés de telle sorte qu'ils ne peuvent être passés dans les fentes qu'en une position angulaire extérieure à la plage correspondante à la branche ouverte ou fermée, c'est-à-dire que l'on doit momentanément cintrer la branche pour assembler et encliqueter la charnière. Ce type de charnière est essentiellement prévu pour être réalisé en matière plastique moulée, donc nécessairement avec des dimensions importantes.

Dans la charnière du troisième document, les deux oeilletons du charnon femelle présentent également chacun une fente alignée leur donnant une forme de double crochet. La largeur des fentes est inférieure de vingt pour-cent au diamètre de l'axe, l'introduction et encliquetage de ce dernier se faisant donc par déformation élastique momentanée du chamon femelle. Mais alors, ce chamon femelle manque de rigidité pour supporter les contraintes habituelles d'une charnière de lunettes, à moins d'être également réalisé en des dimensions importantes.

Dans la charnière du quatrième document, les deux oeilletons du chamon femelle présentent également chacun une fente alignée dont l'une est plus large que l'autre. Pour encliqueter cette charnière, il convient de faire passer la branche ou son tenon dans la fente large par un mouvement d'insertion vertical lorsque cette branche est momentanément cintrée pour la mettre en une position angulaire extérieure à la plage de déplacement entre sa position ouverte ou fermée. Dans la pratique, ce cintrage est toutefois malaisé pour des personnes non qualifiées, et peut également conduire à la détérioration d'enveloppes ou de plaquettes de décoration montées sur cette branche.

Du fait de leurs dimensions importantes, et des difficultés d'assemblages, il est difficilement envisageable de compléter ce type de charnière encliquetable avec un mécanisme élastique autorisant un effet de claquement entre les positions ouverte et fermée, ou un écartement élastique au-delà de leur position ouverte.

On connaît également des charnières à liaison invisible réalisées par une rotule, c'est-à-dire par une sphère solidaire de l'extrémité de la branche prenant place dans un siège sphérique au fond d'une cavité du tenon de façade. Toutefois, ces charnières sont malaisées à assembler. De plus ces charnières sont également très difficiles à réaliser et présentent une moins bonne résistance mécanique du fait qu'un axe de liaison plein au moins aussi haut que la charnière est alors remplacé par une petite sphère. Une usure prématurée du siège risque d'entraîner la séparation de la branche de la monture.

Le but de la présente invention est une charnière de lunettes dont le chamon mâle comprend un axe transversal intégré susceptible de s'encliqueter de manière fiable dans le chamon femelle dont la structure est réaménagée de telle sorte qu'elle soit compatible avec un mécanisme élastique efficace.

De préférence, les parties constitutives de cette charnière doivent être agencées de telle sorte qu'elle soit raisonnablement facile à monter et à démonter au point d'envisager un changement de branche par l'utilisateur même, soit en cas de bris, soit quotidiennement selon l'esthétique du capot de charnière ou du revêtement coloré de branche-tige.

De préférence également, une telle charnière doit être réalisable en petites dimensions, notamment en métal, et comprendre autant que possible un nombre réduit de pièces simples à réaliser, solides et peu onéreuses. Une telle charnière doit en outre pouvoir accueillir des pièces complémentaires de décoration.

Si possible, une telle charnière doit pouvoir autoriser des mouvements supplémentaires de la branche par rapport à la façade pour offrir un confort accru de port.

Ces buts sont atteints grâce à une charnière élastique de lunettes selon la revendication 1.

Le passage radial de l'oeilleton permet l'assemblage du charnon mâle dans le charnon femelle lorsque l'axe apparaît de manière proéminente à l'extrémité de la tige suite au retrait momentanément de la surface d'appui le long de cette tige contre l'effet du mécanisme élastique. Une synergie entre le mécanisme élastique et ces chamons démontables vient du fait que c'est le mécanisme élastique puissant qui assure par la suite le verrouillage de cet assemblage en plus de ses fonctions traditionnelles de claquement et d'écartement de branche. Ceci permet d'éviter de devoir déformer des pièces (branches, oeilletons, etc...) normalement prévues pour être rigides afin de supporter des contraintes mécaniques.

La périphérie de l'un et/ou l'autre des oeilletons présente une première came pour l'effet élastique entre l'ouverture et à la fermeture des branches, et une seconde came pour l'effet élastique au-delà de la position d'ouverture.

Selon un premier mode de réalisation, un passage au moins aussi large que la tige et orienté vers la surface d'appui est ménagé dans l'un des deux oeilletons du chamon femelle.

Alors, le mode d'assemblage consiste à maintenir la surface d'appui écartée de l'axe contre l'action du mécanisme élastique, puis à insérer l'axe dans l'oeilleton en introduisant la tige dans le passage jusqu'à amener cette tige dans l'interstice des oeilletons, puis à libérer la surface d'appui.

Cette configuration est relativement simple à comprendre faisant que tout un chacun peut monter et démonter une telle charnière. De plus, la surface d'appui sous tension génère des forces de friction au niveau de son contact avec le chamon femelle faisant qu'elle empêche l'axe de ressortir accidentellement par le passage.

Si désiré, la tige de chamon mâle présente alors une section cylindrique ou polygonale à angle arrondi de telle sorte que, si la tige tente de ressortir par le passage du chamon femelle lors d'une rotation de la branche, elle est immédiatement ramenée dans l'interstice par la poursuite du déplacement de la branche.

Selon un second mode de réalisation, l'interstice entre les oeilletons est au moins aussi haute que le diamètre de l'axe et que la plus grande dimension de la section de la tige. De plus; un passage orienté à l'opposé de la surface d'appui, et au moins aussi large que le diamètre de l'axe, est ménagé dans chacun des deux oeilletons de la charnière femelle. Avantageusement, la tige de charnon mâle présente alors aussi une section cylindrique ou polygonale à angle arrondi de telle sorte à pouvoir toumer facilement sur elle-même au milieu de l'interstice.

Alors, le mode d'assemblage de la charnière consiste à maintenir la surface d'appui écartée de l'axe contre l'action des moyens élastiques, à insérer l'axe suivi de la tige dans l'interstice du chamon femelle jusqu'à passer cet axe de l'autre côté du chamon femelle, puis à tourner cet axe/tige d'un quart de tour pour l'insérer dans les passages opposés, puis à libérer la surface d'appui.

Cette charnière est particulièrement fiable du fait que les passages d'insertion de l'axe dans le chamon femelle sont orientés du côté opposé à celui où prend contact la surface d'appui, ce qui élimine tout risque de démontage intempestif.

De préférence, la surface d'appui comprend un tenon protubérant venant s'insérer dans l'interstice entre les oeilletons du chamon femelle. Ce tenon assure un positionnement précis de la surface d'appui par rapport au chamon femelle afin d'éviter tout décalage inesthétique. Plus important, ce tenon assure de manière simple un verrouillage effectif de la charnière assemblée, notamment dans le premier mode de réalisation où il empêche la tige de remonter dans le passage.

De préférence une paroi ferme l'interstice entre les oeilletons au niveau de la position de la tige correspondante à la position maximale désirée de la branche au-delà de sa position ouverte. Cette paroi permet également de rigidifier l'interstice entre les oeilletons.

Lorsque le mécanisme élastique est du type "à coulisse" ou "à tige", la surface d'appui est alors constituée par les bords de l'embouchure du logement, et la partie arrière de ce logement est alors ouverte pour laisser apparaître l'extrémité arrière de la coulisse ou de la tige. Ainsi, on peut pousser avec un outil, tel qu'un chasse-goupille, sur la partie arrière de la coulisse ou de la tige pour sortir la chamon mâle, c'est-à-dire écarter l'axe du chamon mâle de l'embouchure du logement à fin d'assemblage de la charnière.

De préférence, le mécanisme élastique est de type "à fourreau", c'est-à-dire comprenant un fourreau dont la face frontale constitue la surface d'appui. Ce fourreau coulisse sur une tige/branche rigide car d'un seul tenant, et il est poussé contre le chamon femelle en forme de came par un ressort également concentrique à la branche prenant appui à l'arrière contre une butée telle qu'une bague sertie sur la branche.

Un premier avantage inhérent à ce type de charnière est sa simplicité dans la mesure où son mécanisme est constitué essentiellement que de trois pièces simples chacune facile à fabriquer ou à se procurer sur le marché, puis à assembler. De plus, ce mécanisme peut être peu volumineux lorsque réalisé en métal, avec ou sans capot de décoration et de protection du ressort.

Surtout, dans la pratique, il s'avère beaucoup plus facile de tirer en arrière un fourreau contre l'action d'un ressort que de pousser en avant une coulisse ou une tige lors de l'assemblage du premier mode de réalisation. L'assemblage du second mode de réalisation est encore plus facile dans la mesure où, le fourreau étant en appui contre le charnon femelle, il suffit de pousser sur la branche pour faire passer l'axe et la tige au travers de l'interstice, et, toujours en agissant sur la branche, de faire tourner l'axe d'un quart de tour et l'engager dans son siège du charnon femelle.

L'invention sera mieux comprise à l'étude de modes de réalisation pris à titre nullement limitatif et illustrés dans les figures annexées dans lesquelles :
- la figure 1 est une vue en perspective des différents composants d'un premier mode de réalisation d'une charnière démontable,
- les figures 2a, 2b, 2c et 2d sont des vues en perspective du mode d'assemblage de la charnière selon la figure 1,
- les figures 3a, 3b et 3c sont des vues en perspective de la charnière selon la figure 1 avec la branche respectivement en position fermée, ouverte, et au-delà de la position ouverte,
- la figure 4 est une vue en perspective des différents composants d'un second mode de réalisation d'une charnière démontable,
- les figures 5a, 5b, 5c, 5d, 5e et 5f sont des vues en perspective du mode d'assemblage de la charnière selon la figure 4,
- les figures 6a, 6b et 6c sont des vues en perspective de la charnière selon la figure 4 avec la branche respectivement en position fermée, ouverte, et au-delà de la position ouverte, et
- les figures 7a, 7b et 7c sont des vues en perspective de la charnière selon la figure 4 avec la branche respectivement en position neutre horizontale, en position oblique vers le haut et en position oblique vers le bas.

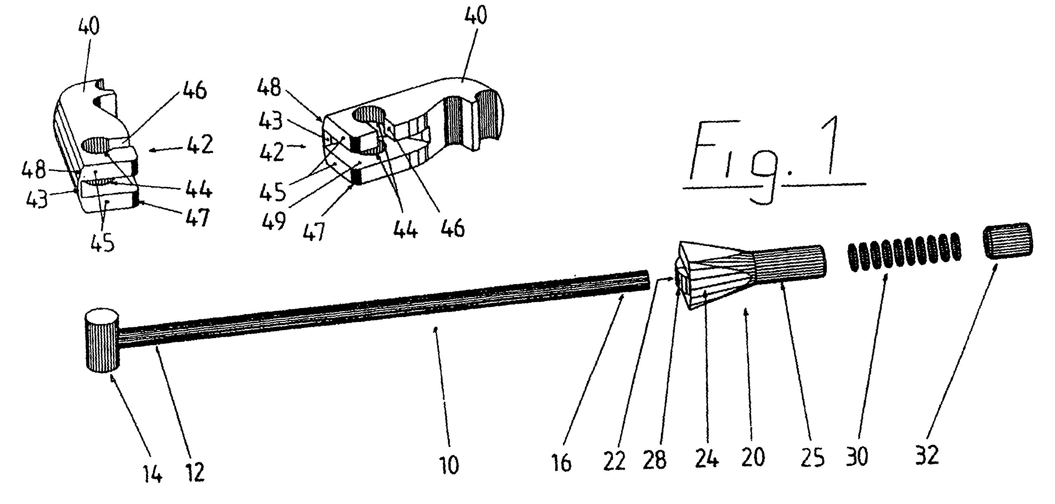

Dans la partie inférieure de la figure 1 est illustrée, du côté gauche, une branche 10 de monture de lunettes et, du côté droit, les pièces constitutives d'un mécanisme élastique.

En l'occurrence, la branche 10 est basée sur une tige métallique de 11 à 12 cm de long, de diamètre compris entre 0,5 et 2 mm, et dont l'extrémité arrière 16 est prévue pour être ultérieurement repliée vers le bas pour former un embout coudé d'accrochage derrière les oreilles du porteur. La forme de la section de cette tige peut être quelconque, mais est de préférence circulaire ou polygonale (carrée, octogonale...) avec des angles arrondis. L'autre extrémité de la tige 12 porte un axe transversal vertical 14 pour constituer ainsi un chamon mâle de charnière réduit à sa forme la plus simple possible. Le diamètre de cet axe peut être inférieur, égal, mais de préférence supérieur à celui de la tige de branche en étant compris entre 1 et 2 mm. La hauteur de cet axe 14 est de l'ordre de 3 mm, c'est-à-dire que deux portions protubèrent en haut et en bas d'environ 1 mm par rapport à la tige. Cet axe peut être rapporté par soudure ou être directement frappé dans la matière composant l'extrémité 12 de la tige.

Tel qu'illustré, le mécanisme élastique de type "à fourreau" ne se compose que de trois pièces à savoir un fourreau 20 coulissant le long de la branche/tige, un ressort 30 et une bague 32 successivement enfilés par-dessus la branche/tige 10.

Le fourreau 20 comprend un conduit inteme 22 dont la forme et les dimensions de la section transversale sont sensiblement identiques à celles de la branche/tige 10. La partie arrière 25 de ce fourreau est, dans le cas illustré, cylindrique mais peut également se prolonger sous la forme d'une enveloppe cylindrique passant par-dessus le ressort 30 et en partie par-dessus la bague 32. La partie postérieure 24 forme un élargissement pour créer une surface verticale d'appui frontale 26 sensiblement orthogonale à la branche/tige. Selon l'esthétique désirée, cette partie 24 peut être soit conique ou pyramidale ou parallélépipédique formant dans ce dernier cas un décrochement bien visible par rapport à la partie arrière plus petite. Plus particulièrement selon l'invention, un tenon horizontal 28 aux bords extérieurs arrondis protubère de la surface d'appui 26.

Le ressort 30 peut être constitué d'une pluralité d'anneaux en élastomère souple, mais, de préférence, est un ressort hélicoïdal en acier disponible couramment dans le commerce. La bague 32 peut être simplement cylindrique comme illustré mais peut également avoir d'autres formes externes (bombées, crénelées...), selon l'esthétique désirée. Cette bague 32 peut également être constituée par une enveloppe de couleur recouvrant la majeure partie de la longueur de la branche/tige 10. En alternative, cette bague 32 peut également être prolongée vers l'avant par une enveloppe cylindrique de décoration couvrant le ressort 30 et une portion de la partie arrière 25 du fourreau 20.

Dans la partie supérieure de la figure 1 est illustré, selon deux angles de vue différents, le tenon de façade 40 se terminant en une charnière femelle 42 spécialement adaptée pour le charnon mâle 12/14 selon l'invention. Le tenon de façade 40 est rendu solidaire des côtés latéraux des cercles de monture de verres, par exemple en étant l'un des composants des barillets serre-cercles.

De manière conventionnelle, le charnon femelle 42 se compose de deux oeilletons 45 séparés par un interstice 49, l'alignement des ouvertures des deux oeilletons en vis-à-vis formant un siège cylindrique 44 d'axe de charnière 14.

Plus particulièrement selon l'invention, l'un des deux oeilletons, en l'occurrence l'oeilleton supérieur, présente un passage radial 46 orienté dans la direction de la branche 10 lorsque celle-ci est en position fermée. La largeur de ce passage radial 46 est au moins aussi large que celle de cette branche 10.

La périphérie externe identique pour les deux oeilletons 45 est sensiblement rectangulaire à angles arrondis pour former deux cames : une première came 47 pour un effet de claquement élastique lors du passage de la branche de sa position fermée à sa position ouverte, et une deuxième came 48 pour un effet élastique lorsque la branche est tirée au-delà de sa position ouverte.

De préférence, une paroi 43 relie les deux oeilletons 45 pour les rigidifier et ainsi mieux maintenir la hauteur de l'interstice 49. Surtout, le départ de cette paroi 43 marque la position extrême de la branche en position écartée, l'extrémité 12 de tige venant alors en butée contre cette paroi.

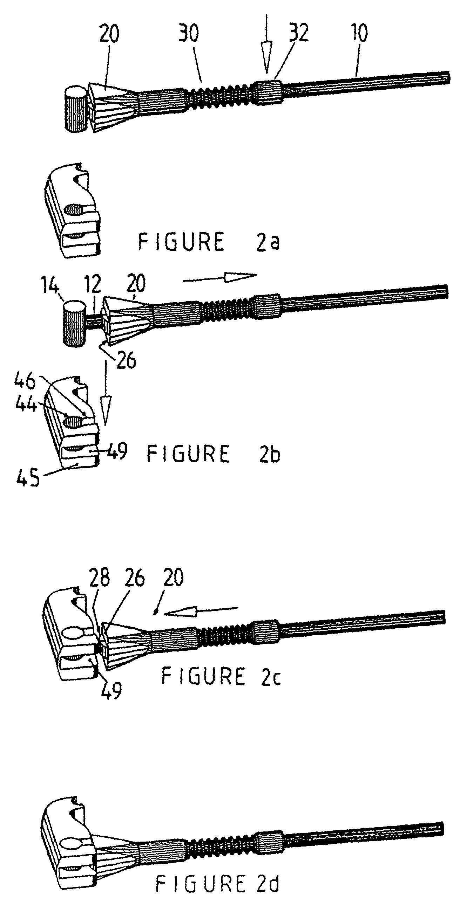

Le mode d'assemblage et de démontage de cette charnière selon l'invention sera mieux compris à l'examen des figures 2.

Sur la figure 2a est illustré comment le fourreau 20, le ressort 30 et la bague 32 ont d'abord été enfilés successivement sur la branche/tige 10. Selon la rigidité du ressort, celui-ci est légèrement comprimé ou non avant de sertir la bague 32 sur la branche 10 lorsqu'en contact avec l'extrémité arrière de ce ressort.

Sur la figure 2b est illustré comment le fourreau 20 est tiré en arrière en comprimant le ressort, ce qui permet de faire apparaître l'axe de charnière 14 de manière proéminente par rapport à la surface d'appui 26 du fourreau qui s'est donc déplacée parallèlement à la tige 10. On peut alors introduire cet axe 14 dans l'entrée du siège 44 du chamon femelle 42 et, lorsqu'on le glisse vers le bas, on introduit simultanément l'extrémité 12 de tige dans le passage 46. Ce mouvement de descente s'effectue jusqu'à ce que l'extrémité 12 vienne en appui contre l'oeilleton 45 inférieur, donc que cette tige se retrouve dans l'interstice 49.

A ce moment, et comme bien illustré sur la figure 2c, la libération du fourreau 20 fait que son tenon proéminent 28 vient s'engager dans l'interstice 49 et que les parties restantes actives de la surface d'appui 26, c'est-à-dire celles en vis-à-vis des portions proéminentes d'axe 14, viennent en contact sous tension contre les périphéries des oeilletons 45.

Comme bien visible sur la figure 2d, le ressort 30 exerce une poussée sur le fourreau 20 qui assure le maintien du tenon 28 dans l'interstice 49, donc un verrouillage efficace de la charnière assemblée. Il convient de noter que, même sans tenon, cette poussée du ressort génère des forces de friction au niveau de la surface d'appui 26 rendant déjà improbable une levée de l'axe 14 dans son siège 44 précisément au moment où l'extrémité de branche 12 est en regard du passage 46. De plus, si tel devait être légèrement le cas en cours de rotation de la branche/tige, la forme cylindrique de sa section permet de la rabattre immédiatement dans cet interstice.

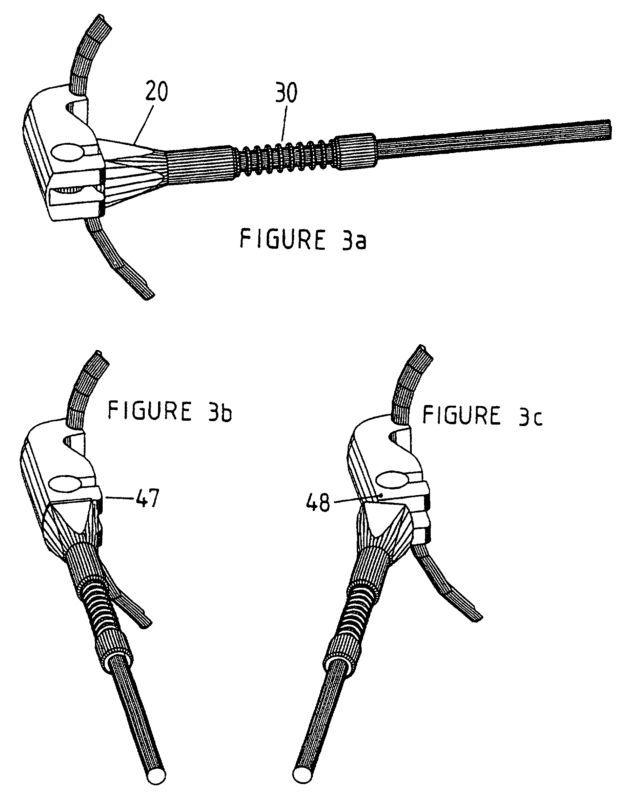

La figure 3a illustre la branche en position fermée dans laquelle la surface d'appui du fourreau porte sur l'un des côtés rectilignes de la périphérie du chamon. Lors du passage de la branche 10 de la position de la figure 3a à sa position dite "ouverte" tel qu'illustré sur la figure 3b, la came 47 imprime un retrait en arrière du fourreau 20 le long de la tige en comprimant le ressort 30 qui se détend lorsque la surface d'appui du fourreau revient en contact avec le second côté rectiligne de la périphérie du chamon femelle 42. Si la branche est écartée au-delà de sa position ouverte tel qu'illustré sur la figure 3c, alors la seconde came 48 force à nouveau un retrait du fourreau en comprimant le ressort, celui-ci tendant à ramener la branche de retour vers la position neutre de la figure 3b.

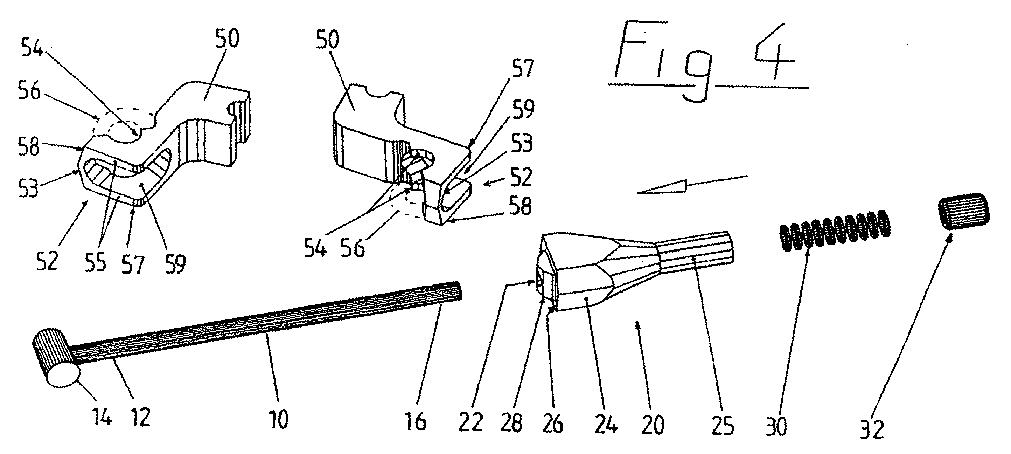

Sur la figure 4 est illustré un second mode de réalisation d'une charnière démontable selon l'invention. Notamment, dans ce mode de réalisation, la branche 10, le mécanisme élastique 20/30/32 et le chamon mâle 12/14 sont rigoureusement identiques à ceux décrits précédemment en relation avec la figure 1, et les pièces et parties correspondantes portent des références numériques identiques.

Ce mode de réalisation diffère sensiblement au niveau de la structure du chamon femelle 52 usiné à l'extrémité du tenon de façade 50. Comme précédemment, ce charnon femelle 52 comprend deux oeilletons 55 dont les ouvertures centrales alignées verticalement en vis-à-vis forment un siège d'axe 54. Par contre, dans ce mode de réalisation, ce siège d'axe 54 est accessible par l'arrière de par la présence de passages radials 56 orientés vers l'avant, c'est-à-dire à l'opposé de la direction de la branche 10. De plus, l'interstice 59 entre les oeilletons 55 est plus haut, à savoir aussi haut que le diamètre de l'axe 14.

La présence des passages arrières 56 donne à la périphérie des oeilletons illustrés une forme presque triangulaire avec deux bords rectilignes séparés par un angle arrondi formant une première came 57 agissant lors du passage de la branche de sa position fermée à ouverte. Cette périphérie comporte une seconde came d'extrémité 58 notamment délimitée par une paroi 53 de butée fermant notamment l'interstice 59 qu'elle consolide, cette came 58 intervenant au moment où la branche est écartée au-delà de sa position ouverte.

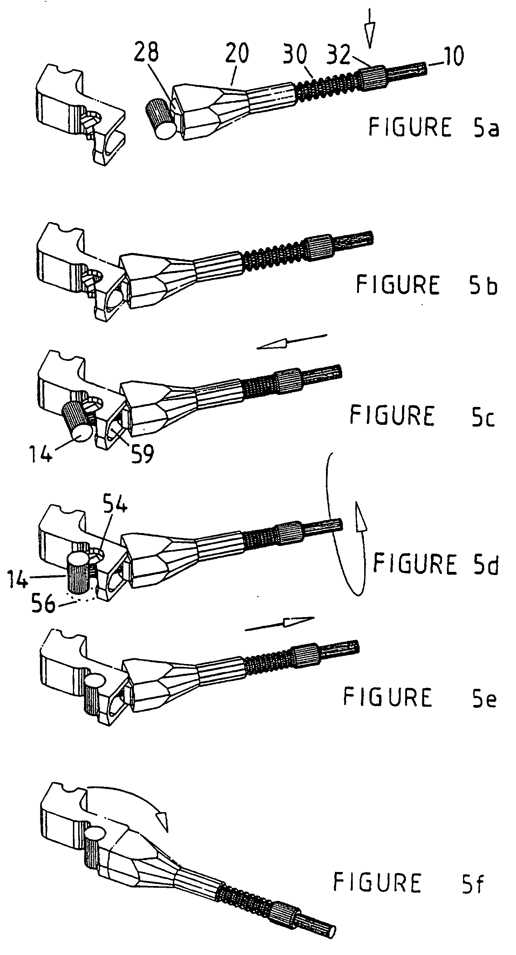

Le mode d'assemblage de cette seconde charnière sera mieux compris à l'examen des figures 5.

Sur la figure 5a est illustré comment le fourreau 20, le ressort 30 puis la bague 32 sont enfilés sur la branche/tige 10. Comme précédemment, la bague 32 est sertie sur cette tige avec, éventuellement, le ressort en légère pré-compression. Dans ce cas toutefois, l'axe 14 de charnière est ici aligné parallèlement au tenon 28 du fourreau 20.

Comme bien visible sur la figure 5b, on peut alors insérer l'axe 14 dans l'interstice 59 puis, comme illustré sur la figure 5c, faire sortir cet axe de l'autre côté du chamon femelle en poussant sur la branche 10, le charnon femelle forçant alors un coulissement du fourreau 20 en comprimant le ressort 30. Dans cette situation, on imprime à la branche un quart de tour tel qu'illustré sur la figure 5d, ce qui réaligne l'axe 14 par rapport au passage arrière 56 permettant alors, en relâchant la branche qui recule sous l'effet du ressort, d'installer cet axe dans son siège 54 comme bien visible sur la figure 5e. La détente finale du ressort 30 tend à ramener la branche en l'une de ses deux positions de repos, par exemple sa position ouverte tel qu'illustré sur la figure 5f.

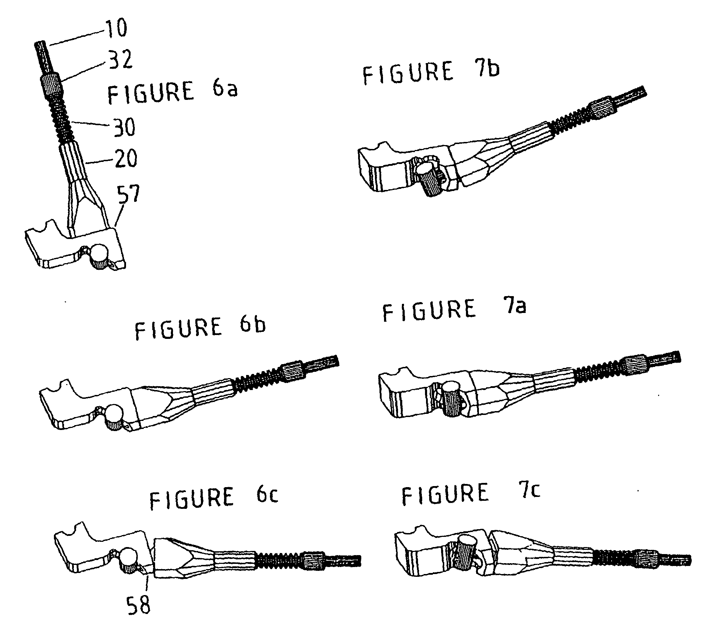

La figure 6a illustre cette seconde charnière avec la branche en position fermée. Lors du passage de cette branche à sa position ouverte, comme illustré sur la figure 6b, la came 57 force un retrait du fourreau 20 le long de la branche/tige 10 en comprimant momentanément le ressort 30. La figure 6c illustre comment, lorsque la branche est sollicitée au-delà de sa position ouverte, la seconde came 58 force à nouveau un retrait du fourreau à l'encontre du ressort.

Les figures 7 illustrent un avantage remarquable de ce second mode de réalisation d'une charnière, à savoir que cette charnière autorise également une flexion de la branche dans un plan vertical perpendiculaire au plan vertical de la façade de monture de verres. La figure 7a illustre de côté la branche ouverte en position neutre horizontale.

La figure 7b illustre comment cette seconde charnière autorise une orientation oblique élastique de la branche vers le haut, ce qui apporte un confort apprécié pour une personne ayant une morphologie dans laquelle le départ du nez est sensiblement plus bas que l'implantation des oreilles. Dans ce cas, la portion inférieure de l'axe prenant appui dans son siège, la périphérie externe de l'oeilleton supérieur repousse légèrement le fourreau en arrière, ce qui comprime le ressort 30. Cette correction est donc contrôlée par la rigidité du ressort. La figure 7c illustre la correction en sens inverse, c'est-à-dire quand la branche est sollicité dans une flexion vers le bas. Dans ce cas, c'est la périphérie de l'oeilleton inférieure qui repousse le fourreau, la portion inférieure de l'axe sortant de son siège, la portion supérieure restant en appui.

L'invention n'est pas strictement limitée aux exemples de réalisation décrits dans la mesure où de nombreuses améliorations peuvent être apportées à cette charnière dans le cadre des revendications. En effet, on peut également envisager l'utilisation des chamons femelles 42,52 selon l'invention en relation avec des mécanismes élastiques de type "à tige" ou "à coulisse" pour autant que les enveloppes soient ouvertes à l'arrière. En effet, grâce à cette ouverture arrière de l'enveloppe, on peut alors accéder aux parties arrières des tiges ou coulisses pour les pousser à l'aide d'un outil et rendre ainsi le chamon mâle, également réduit à un axe solidaire de l'extrémité d'une tige, sensiblement proéminent par rapport à une surface d'appui constituée, en l'occurrence, par les parois de l'embouchure avant du logement.

Un autre avantage de la charnière démontable selon l'invention est que tous ces constituants, hormis le ressort, peuvent être réalisés en un matériau rigide, par exemple des matières plastiques thermodurcissables moulées. Toutefois, les pièces constitutives étant des structures relativement simples, elles sont de préférence usinées en métal pour obtenir des charnières de très petites dimensions, donc fort esthétiques, la présence du ressort amortissant les à-coups, donc l'usure, ce qui augmente grandement la fiabilité à long terme.

Compte-tenu que les modes d'assemblage décrits en relation avec les figures 2 et 5 sont facilement compréhensibles, on peut même envisager qu'un utilisateur achète une pluralité de paires de branches avec une façade de support de verres, chaque paire ayant une enveloppe de couleur différente ou des formes de capots de protection de ressort de formes différentes. L'utilisateur peut ainsi changer presque quotidiennement l'esthétique de sa monture de lunette au gré de son humeur.

## Revendications

1. Charnière élastique de lunettes comprenant en combinaison, d'un côté, un charnon mâle comportant une tige (12) dont une extrémité est solidaire du milieu d'un axe transversal (14) de liaison de charnière, et un fourreau ayant une surface d'appui (26) au moins en vis-à-vis de chaque portion dudit axe protubérant de la tige, l'axe et la surface d'appui étant normalement rapprochés l'un par rapport à l'autre dans le sens longitudinal de la tige par un mécanisme élastique (20,30,32), et étant susceptibles d'être écartés à volonté â l'encontre du mécanisme élastique ; et de l'autre côté, un charnon femelle (42,52) comportant deux oeilletons séparés par un interstice la périphérie des oeilletons (45,55), contre laquelle la surface vient prendre appui, étant en forme de came, au moins l'un des oeilletons présentant un passage radial (46,56), et l'interstice (49,59) entre les oeilletons étant au moins aussi large que la tige (12).

2. Charnière selon la revendication 1, **caractérisée en ce qu'**un passage (46) au moins aussi large que la tige (12) et orienté vers la surface d'appui (26) est ménagé dans l'un des deux oeilletons (45) du chamon femelle (42).

3. Charnière selon la revendication 1, **caractérisée en ce que** l'interstice (59) entre les oeilletons (55) est au moins aussi haut que le diamètre de l'axe (14) et que la plus grande dimension de la section de la tige, et **en ce qu'**un passage (56) orienté à l'opposé de la surface d'appui (26), et au moins aussi large que le diamètre de l'axe, est ménagé dans chacun des deux oeilletons (55) de la charnière femelle.

4. Charnière selon l'une des revendications précédentes, **caractérisée en ce que** la surface d'appui (26) comprend un tenon (28) protubérant venant s'insérer dans l'interstice (49,59) entre les oeilletons (45,55) du chamon femelle.

5. Charnière selon l'une des revendications précédentes, **caractérisée en ce qu'**une paroi (43,53) ferme l'interstice (49,59) entre les oeilletons (45,55) au niveau de la position de la tige (12) correspondante à la position maximale désirée de la branche (10) au-delà de sa position ouverte.

6. Charnière selon l'une des revendications précédentes, **caractérisée en ce que** le mécanisme élastique comprenant ledit fourreau (20) dont la face frontale constitue la surface d'appui (26), coulisse sur une tige où il est poussé contre le charnon femelle (42,52) en forme de came par un ressort (30) concentrique à la branche prenant appui à l'arrière contre une butée de la branche.

## Claims

1. Resilient hinge for spectacles comprising, in combination, on the one hand, a male knuckle with a rod having an end (12) secured to the middle of a transverse connecting hinge pin (14), and a sleeve having a supporting surface (26) opposite at least each hinge pin portion protruding from the rod, the hinge pin and the supporting surface being normally brought together in the longitudinal direction of the rod by a resilient mechanism (20, 30, 32), and being capable of being separated at will in opposition to the resilient mechanism; and on the other hand, a female knuckle (42, 52) with two eyes separated by a gap, the periphery of the eyes (45, 55), against which the surface rests, being in the form of a cam, at least one of the eyes having radial passage (46, 56), and the gap (49, 59) between the eyes being at least as large as the rod (12).

2. Hinge according to claim 1, **characterized in that** a passage (46) at least as wide as the rod (12) and directed towards the supporting surface (26) is provided in one of the two eyes (45) of the female knuckle (42).

3. Hinge according to claim 1, **characterized in that** the gap (59) between the eyes (55) is at least as high as the diameter of the pin (14) and the largest dimension of the cross-section of the rod, and **in that** a passage (56) directed away from the supporting surface (26), and at least as wide as the diameter of the pin, is provided in each of the two eyes (55) of the female knuckle.

4. Hinge according to one of the preceding claims, **characterized in that** the supporting surface (26) includes a protruding lug (28) inserted in the gap (49, 59) between the eyes (45, 55) of the female knuckle.

5. Hinge according to one of the preceding claims, **characterized in that** a wall (43, 53) closes the gap (49, 59) between the eyes (45, 55) in the region of the position of the rod (12) corresponding to the maximum desired position of the arm (10) beyond its open position.

6. Hinge according to one of the preceding claims, **characterized in that** the resilient mechanism comprises a sleeve (20) of which the front face constitutes the supporting surface (26), this sleeve sliding on a rod where it is pushed against the female knuckle (42, 52) in the form of a cam by a spring (30) concentric with the arm pressing at the rear against a stop of the arm.

## Patentansprüche

1. Elastisches Brillenscharnier, daß es in Kombination folgendes umfaßt:
- einerseits ein männliches Scharnierteil, mit einem Schaft (12), der ein Ende hat, das einstückig mit der Mitte einer Querachse (14) zur Verbindung des Scharniers ausgebildet ist, und eine Hülse, die eine Anlagefläche (26) mindestens gegenüber jedem vorspringenden Achsenabschnitt des Schafts aufweist, wobei die Achse und die Anlagefläche normalerweise in Längsrichtung des Schafts durch einen elastischen Mechanismus (20, 30, 32) einander angenähert und geeignet sind, beliebig gegen den elastischen Mechanismus beabstandet zu werden, und
- andererseits ein weibliches Scharnierteil (42, 52) mit zwei von einer Lücke getrennenen Kerbkanten, wobei die Peripherie der Kerbkanten (45, 55), gegen welche die Fläche in Anlage kommt, in der Form einer Kante ausgebildet ist, mindestens eine der Kerbkanten einen radialen Durchgang (46, 56) aufweist und die Lücke (49, 59) zwischen den Kerbkanten mindestens genauso hoch wie der Schaft (12) ist.

2. Scharnier nach Anspruch 1,
**dadurch gekennzeichnet, daß**
ein Durchgang (46), der mindestens genauso breit ist wie der Schaft (12) und in Richtung auf die Anlagefläche (26) ausgerichtet ist, in einer der beiden Kerbkanten (45) des weiblichen Scharnierteils (42) angeordnet ist.

3. Scharnier nach Anspruch 1,
**dadurch gekennzeichnet, daß**
die Lücke (59) zwischen den Kerbkanten (55) mindestens genauso hoch wie der Durchmesser der Achse (14) und wie die größte Abmessung des Querschnitts des Schafts ist, und daß ein Durchgang (56), welcher gegenüber der Anlagefläche (26) orientiert und mindestens genauso breit wie der Durchmesser der Achse ist, in jeder der beiden Kerbkanten (55) des weiblichen Scharniers angeordnet ist.

4. Scharnier nach einem der vorhergehenden Ansprüche,
**dadurch gekennzeichnet, daß**
die Anlagefläche (26) einen vorspringenden Zapfen (28) umfaßt, der in die Lücke (49, 59) zwischen den Kerbkanten (45, 55) des weiblichen Scharnierteils eingefügt wird.

5. Scharnier nach einem der vorhergehenden Ansprüche,
**dadurch gekennzeichnet, daß**
eine Wand (43, 53) die Lücke (49, 59) zwischen den Kerbkanten (45, 55) auf der Höhe der Position des Schafts (12) schließt, die der gewünschten Maximalposition des Schenkels (10) jenseits seiner offenen Position entspricht.

6. Scharnier nach einem der vorhergehenden Ansprüche,
**dadurch gekennzeichnet, daß**
der elastischen Mechanismus eine Hülse (20) umfaßt, deren Vorderseite die Anlagefläche (26) bildet, wobei diese Hülse auf einem Schaft gleitet, wo sie durch eine Feder (30) gegen das weibliche Scharnierteil (42, 52) in der Form einer Kante geschoben wird, die zu dem Schenkel konzentrisch ist, welcher rückwärts gegen einen Anschlag des Schenkels in Anlage kommt.
